**Europäisches Patentamt**

**European Patent Office**

**Office européen des brevets**

(11) Veröffentlichungsnummer: **0 253 077**
**A2**

(12) **EUROPÄISCHE PATENTANMELDUNG**

(21) Anmeldenummer: **87105937.4**

(22) Anmeldetag: **23.04.87**

(51) Int. Cl.⁴: **G 05 B 11/32, F 02 B 37/12**

(30) Priorität: **12.07.86 DE 3623538**

(43) Veröffentlichungstag der Anmeldung: **20.01.88**
**Patentblatt 88/3**

(84) Benannte Vertragsstaaten: **DE FR GB IT SE**

(71) Anmelder: **Dr.Ing.h.c. F. Porsche Aktiengesellschaft, Porschestrasse 42, D-7000 Stuttgart 40 (DE)**

(72) Erfinder: **Richter, Axel, Dr. Dipl.-Phys., Erlenweg 6, D-7251 Wimsheim (DE)**

(54) Verfahren zum Steuern von wenigstens zwei Systemen eines physikalischen Prozesses.

(57) Das Verfahren dient zum Steuern von wenigstens zwei Systemen eines physikalischen Prozesses, wobei die physikalischen Systeme in Steuerabhängigkeit von denselben physikalischen Prozeßgrößen (x, y) stehen. Sie wirken mittelbar oder unmittelbar auf eine weitere gemeinsame Prozeßgröße (c) ein; die Ansteuerungen der beiden Systeme stehen in einem festen funktionellen Zusammenhang zueinander und die Ansteuergrößen (a, b) enstammen jeweils einem festen Wertebereich ((amin) kleiner oder gleich (a) kleiner oder gleich (amax), bzw. (bmin) kleiner oder gleich (b) kleiner oder gleich (bmax)). Erfindungsgemäß werden die beiden physikalischen Systeme über lediglich ein einziges Kennfeld gesteuert, wobei die einzelnen Wertebereiche zu einem gemeinsamen Wertebereich zusammengefügt sind und die Ansteuergrössen (a, b) der einzelnen Systeme aus der gemeinsamen Steuergrösse (ab) durch Umkehrung des funktionellen Zusammenhangs bestimmt werden. Die Vorteile sind in erster Linie darin begründet, daß sich die Ansteuerung vereinfacht und lediglich ein einziges Kennfeld benötigt wird.

# Verfahren zum Steuern von wenigstens zwei Systemen eines physikalischen Prozesses

Die Erfindung betrifft ein Verfahren nach der Gattung des Hauptanspruchs.

Zur Optimierung physikalischer Prozesse wird immer häufiger von den Hilfsmitteln Steuerung bzw. Regelung Gebrauch gemacht. Insbesondere die Steuerung einzelner physikalischer Systeme innerhalb eines Prozesses erfolgt sehr oft über Kennfelder, da Nichtlinearitäten in den Systemen selbst, oder aber eine durch die Optimierung erforderliche besondere Ansteuerung dies erfordert.

Die einzelnen physikalischen Systeme des Prozesses werden hierbei über separate, den jeweiligen Prozessen zugeordnete Kennfelder in Abhängigkeit von physikalischen Prozeßgrößen gesteuert. Hierbei kann es jedoch vorkommen, daß zwei oder mehr Systeme in Abhängigkeit von denselben Prozeßgrößen auf eine gemeinsame weitere Prozeßgröße einwirken und ihre Ansteuerung in einem festen funktionellen Zusammenhang zueinander steht.

Es ist hierbei von Nachteil, daß trotz dieser Zusammenhänge für jedes System ein eigenes Kennfeld benötigt wird. Soll der Steuerung dieser Systeme zudem eine mittelbar oder unmittelbar von der weiteren Prozeßgröße abhängige Regelung überlagert werden, so entsteht häufig das Problem eines nicht numerisch kontinuierlichen Übergangs von der Ansteuerung des einen Systems auf die Ansteurung des anderen, bzw. von Regelung auf Steuerung und umgekehrt.

Es ist daher Aufgabe der Erfindung, die oben beschriebenen Nachteile zu beseitigen und einen Aufwand für eine Ansteuerung von mehreren Systemen eines physikalischen Prozesses zu optimieren bzw. zu reduzieren.

Die Aufgabe wird durch die kennzeichnenden Merkmale des Anspruchs 1 gelöst. Weitere, die Erfindung in vorteilhafter Weise ausgestaltende Merkmale sind in den Unteransprüchen enthalten.

Die Vorteile der Erfindung sind in erster Linie darin zu sehen, daß mit der Erfindung ein Verfahren geschaffen ist, welches einen Aufwand für eine Steuerung von Systemen eines physikalischen Prozesses reduziert, die Steuerung selbst optimiert und durch Schaffung numerisch kontinuierlicher Übergänge zwischen der Ansteuerung der einzelnen Systeme eine einfache übergreifende Regelung ermöglicht.

Die Erfindung wird nachstehend anhand von in den Zeichnungen dargestellten Ausführungsbeispielen näher erläutert.

Es zeigt:
Fig. 1     eine Steuerung für zwei Systeme eines physikalischen Prozesses,
Fig. 2     ein Modul zu einer Auftrennung einer gemeinsamen Steuergröße in Einzelsteuergrößen für die Systeme,
Fig. 3     ein Blockschaltbild einer Abgasturbolader- Anlage einer Mehrzylinder- Brennkraftmaschine,
Fig. 4     eine Tabelle mit einer Zuordnung von Tastverhältniswerten zu Betriebsbereichen,
Fig. 5     ein als Tabelle dargestelltes, quantisiertes und digitalisiertes Kennfeld zur Ansteuerung zweier Ventile der Abgasturboladeranlage.

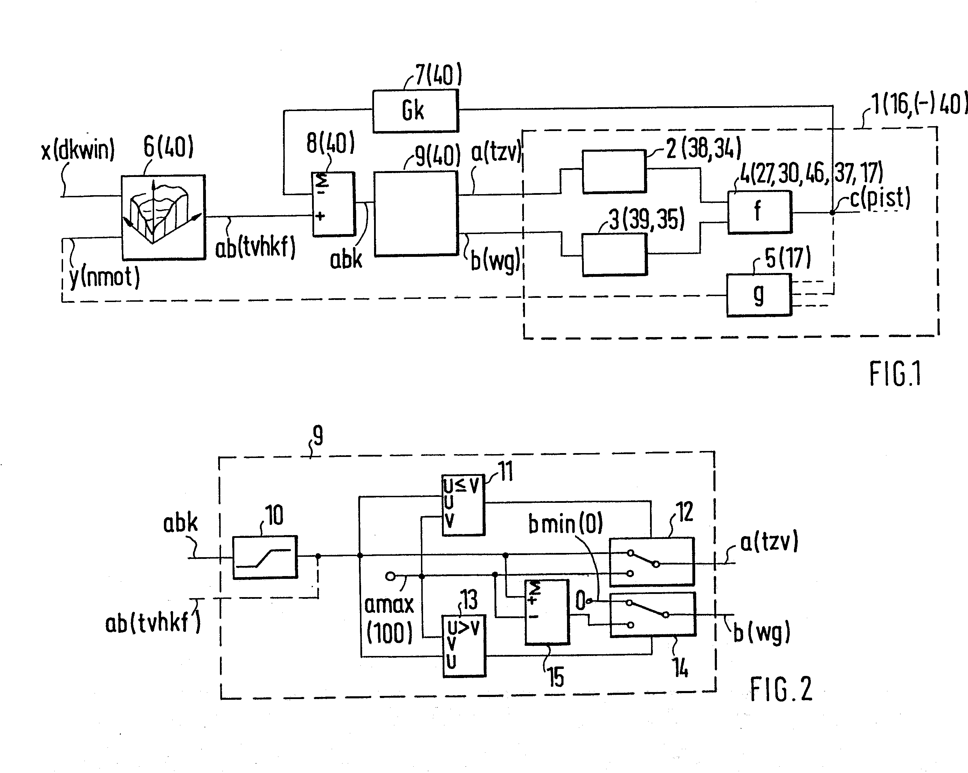

In Fig. 1 ist mit 1 ein physikalischer Prozess gezeigt, innerhalb dessen ein 1. System 2 und ein 2. System 3 über eine Funktion f, 4, auf eine gemeinsame Prozeßgröße c einwirken. Das 1. System 2 und das 2. System 3 stehen in einer Steuerabhängigkeit a, b von denselben Prozeßgrößen x, y, welche beispielsweise Eingangsgrößen (x) sein können oder sich über eine weitere Funktion g, 5, aus der Prozeßgröße c und/oder weiteren Prozeßgrößen ergeben können (y).

Üblicherweise werden nun die Systeme 2, 3 über einzelne, ihnen zugeordnete Kennfelder angesteuert. Es sind also zwei Kennfeldmodule erforderlich, von denen separate Verbindungen zu den Systemen führen. Diese Kennfelder sind erfindungsgemäß zu einem Kennfeld (Kennfeldmodul 6) zusammengefügt, welches den Eingangs- bzw. Prozeßgrößen x, y eine gemeinsame Steuergröße ab zuordnet.

Die beiden Einzelkennfelder mögen hierbei einen Wertebereich von amin kleiner oder gleich a kleiner oder gleich amax, bzw. bmin kleiner oder gleich b kleiner oder gleich bmax aufweisen. Die Zusammenfügung zu einem Kennfeld soll hier beispielsweise so erfolgen, daß eine Kennfeld an das andere angefügt werden soll, so daß abmin=amin und abmax=amax+bmax gilt.

Nimmt man weiter an, daß die Wertebereiche der beiden Einzelkennfelder die ganzen Zahlen von 0 bis 100 umfassen, so baut sich der Wertebereich des zusammgefassten Kennfelds (Kennfeldmodul 6) aus dem Wertebereich der ganzen Zahlen von 0 bis 200 auf, mit amin=bmin=abmin=0, amax=bmax=100 und abmax=200.

Soll zudem zusätzlich zur Steuerung übergreifend geregelt werden, indem beispielsweise die Prozeßgröße c über ein Korrekturmodul 7 und ein Subtraktionsmodul 8 auf die gemeinsame Steuergröße ab zurückgeführt wird, so ergibt sich eine weitere Einsparung von zwei Modulen; Korrekturmodul 7 und Subtraktionsmodul 8 müssen nun nicht mehr doppelt ausgeführt werden, die Regelung vereinfacht sich, da eine gegenseitige Kopplung der Korrekturmodule nicht mehr auftritt.

Die korrigierte gemeinsame Steuergröße abk wird nun noch in einem Auftrennmodul 9 in seine Einzelsteuergrößen a, b aufgetrennt und dem 1. System 2 und dem 2. System 3 zugeführt.

Ein Beispiel für ein derartiges Auftrennmodul 9 ist in Fig. 2 gezeigt. Das 1. System 2 und das 2. System 3 werden hierbei derart angesteuert, daß mit anwachsenden Werten der gemeinsamen Steuergröße ab bzw. der Korrigierten abk zunächst nur das 1. System 2 angesteuert wird, bis dieses vollausgesteuert ist (ab=amax, bzw. abk=amax). Bei noch höheren Werten von ab bzw. abk bleibt das 1. System 2 vollausgesteuert und das 2. System 3 wird mit einer zunehmenden Steuergröße b beaufschlagt.

Hierzu wird bei Einsatz einer übergreifenden Regelung die korrigierte Steuergröße abk zunächst einer Begrenzung 10 unterworfen, welche die korrigierte Steuergröße abk auf Aussteuergrenzen begrenzt und welche bei reiner Steuerung (mit ab) entfallen kann.

Ein 1. Komparatormodul 11 vergleicht ab bzw. abk mit dem Wert amax und steuert ein 1. Schaltmodul 12 an, so daß dieses für Werte von ab bzw. der begrenzten Korrigierten abk kleiner oder gleich amax den Wert ab bzw. die begrenzte Korrigierte abk, und sonst den Wert amax als Ansteuergröße a ausgibt

Ein 2. Komparatormodul 13 vergleicht ebenfalls ab bzw. abk mit dem Wert amax und steuert ein 2. Schaltmodul 14 derart an, daß dieses für Werte von ab bzw. abk größer als amax eine Differenz aus dem Wert ab bzw. abk und amax, welche in einem Subtraktionsmodul 15 gebildet wird, als Ansteuergröße b ausgibt und sonst den Wert bmin=0.

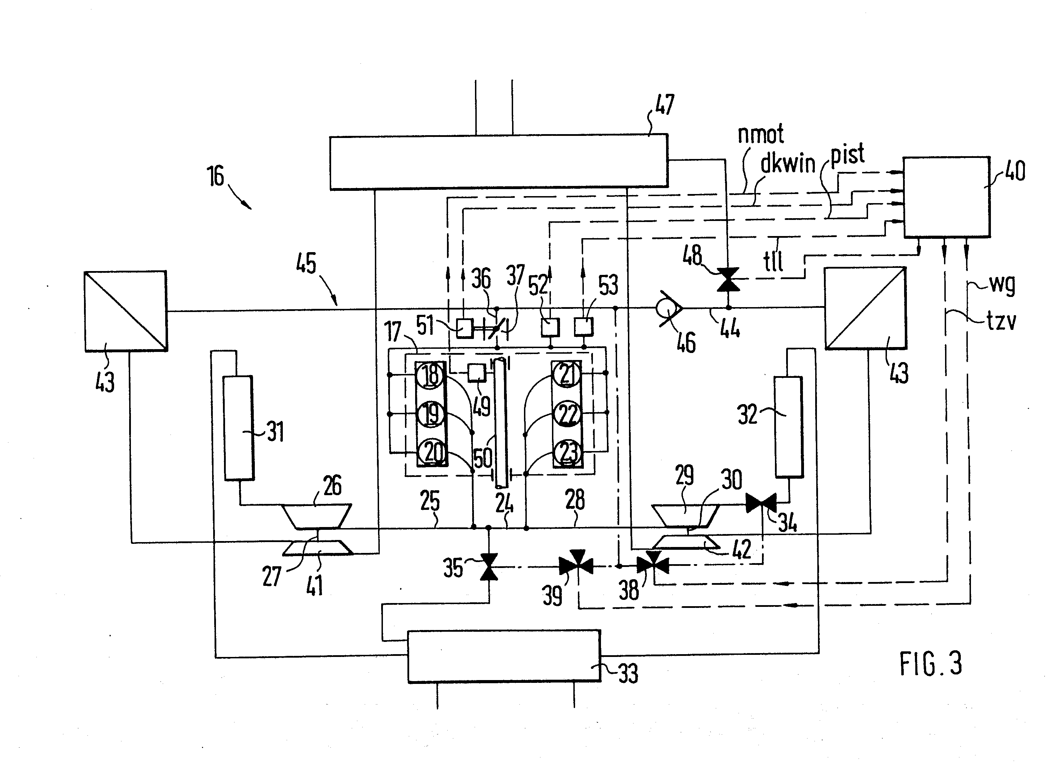

Ein Ausführungsbeispiel einer solchen Steuerung sei anhand einer Abgasturboladeranlage für eine Brennkraftmaschine mit Registeraufladung erläutert, deren Blockschaltbild in Fig. 3 wiedergegeben ist. Die Anlage soll jedoch nicht in ihrer Gesamtheit beschrieben werden, sondern nur in den Teilen, die für die Kennfeldsteuerung von zwei Abgasventilen maßgeblich sind; die genaue Funktion der Anlage ist in der DE-OS 34 20 015 und in einer von der Anmelderin unter dem Titel "Mehrzylinder- Brennkraftmaschine mit zwei Abgasturboladern" am selben Tag hinterlegten Anmeldung näher beschrieben. In der Fig. 3 sind pneumatische Leitungen durchgezogen, pneumatische Steuerleitungen strichpunktiert und elektrische Leitungen gestrichelt gezeichnet.

Die Abgasturboladeranlage 16 umfaßt eine Brennkraftmaschine 17, deren Zylinder 18 bis 23 (in nicht notwendiger Weise) in zwei Gruppen aufgeteilt sind. Die Abgasrohre aus den Zylindern münden in ein gemeinsames Abgassammelrohr 24, von dem eine Abgasleitung 25 zum Antrieb einer Turbine 26 eines ersten Abgasturboladers 27 und eine weitere Abgasleitung 28 zum Antrieb einer Turbine 29 eines zweiten Abgasturboladers 30 ausgeht. Der Ausgang der Turbinen 26 und 29 kann entweder über Vorschalldämpfer 31, 32 bzw. Katalysatoren oder auch direkt über Rohrleitungen in einen Endschalldämpfer 33 geführt sein.

In die Abgasleitung 28 der Turbine 29 ist ein Zuschaltventil 34 eingesetzt, das sowohl vor als auch hinter der Turbine 29 angeordnet sein kann. Ferner ist das Abgassammelrohr 24 über ein Abblaseventil (Wastegate) 35 mit dem Endschalldämpfer 33 verbunden. Zuschaltventil 34 und Abblaseventil 35 sind pneumatisch betätigte Ventile, die in nicht angesteuertem Zustand geöffnet sind. Pneumatische Hilfsenergie, die einem Sammelsaugrohr 36 vor einem Leistungssteuerorgan (Drosselklappe) 37 entnommen wird, wird den Ventilen 34, 35 über ihnen zugeordnete Steuerventile 38, 39 zugeführt. Die elektrisch betriebenen Steuerventile 38, 39 werden durch ein Steuergerät 40 mit einem Tastverhältnis beaufschlagt und verbinden das Zuschaltventil 34 bzw. das Abblaseventil 35 im nicht angesteuerten Zustand mit der Atmosphäre. Genauer betrachtet wird ein Steuerraum des Zuschaltventils 34 bzw. des Abblaseventils 35 entsprechend dem anliegenden Tastverhältnis mehr oder weniger mit einem Druckmedium hohen Drucks (über die Druckentnahmestelle im Sammelsaugrohr 36 stromauf der Drosselklappe 37), bzw. mit einem Druckmedium niedrigen Drucks, beispielsweise der Atmosphäre verbunden, wobei im nicht angesteuerten Zustand der Steuerventile 38, 39 der Steuerraum auf Atmosphärendruck liegt; aus Übersichtlichkeitsgründen wurde in der Fig. 1 auf eine derartige Betrachtung jedoch verzichtet.

Die von den Turbinen 26 und 29 angetriebenen Verdichter 41, 42 fördern Druckluft über Ladeluftkühler 43 zum Sammelsaugrohr 36; vom Sammelsaugrohr 36 verteilt sich die Ladeluft gleichmäßig auf die Einzelsaugrohre zu den Zylindern 18 bis 23. In einem Teilabschnitt 44 einer Ladeluftleitung 45 ist ein Rückschlagventil 46, wie es in der DE-OS 34 20 015 näher beschrieben ist, eingesetzt. In einem Bypass zum Verdichter 42, der den Teilabschnitt 44 der Ladeluftleitung 45 mit einem Luftfilter 47 verbindet, ist ein Entlüftungsventil 48 eingesetzt; dieses ist über das Steuergerät 40 ansteuerbar.

Schließlich erfaßt das Steuergerät noch Signale von einem Drehzahlsensor 49 (Drehzahl nmot der Kurbelwelle 50 der Brennkraftmaschine 17), einem Drosselklappen-Stellungssensor 51 (Stellung der Drosselklappe 37, Drosselklappenwinkel dkwin), einem Saugrohrdrucksensor 52 (Saugrohrdruck pist im Sammelsaugrohr 36, stromabwärts der Drosselklappe) und einem Temperatursensor 53 (Ladelufttemperatur tan). Diese Signale setzt es in entsprechende Ansteuersignale für die Steuerventile 38, 39 des Zuschaltventils 34 und des Abblaseventils 35 und für das Entlüftungsventil 48 um.

Die Funktion des Zuschaltventils 34 und des Abblaseventils 35 erklärt sich wie folgt:
- Das Zuschaltventil 34 ermöglicht eine kontinuierlich verstellbare Beaufschlagung des 2. Abgasturboladers 30 mit Abgas und eine Beschleunigung seiner Laderwelle. Die darüber abfließende Abgasmenge reduziert gleichzeitig die dem 1. Abgasturbolader 27 zufließende Abgasmenge, so daß die Funktion des Zuschaltventils 34 - bezüglich des 1. Abgasturboladers 27 - der eines Wastegates (Abblaseventils) bei einfach aufgeladenem Motor entspricht.
- Das Wastegate ist gemeinsames Abblaseventil für beide Abgasturbolader 27, 30.

Die Ansteuerung des Zuschalt- 34 bzw. Abblaseventils 35 erfolgt in der Weise, daß sich ein Schließgrad (100% entspricht dem geschlossenen Zustand des Zuschalt- bzw. Abblaseventils) durch das am jeweiligen Steuerventil (getaktet betrieben) anliegende Tastverhältnis (bei konstanter Taktfrequenz) bestimmt; der Steuerbereich liegt hierbei zwischen 0% und 100%. Eine Ansteuerung der beiden Ventile mit einem von 0% bzw. 100% abweichenden Tastverhältnis (nicht angesteuert bzw. voll angesteuert) erfolgt für die beiden Ventile grundsätzlich alternativ, d.h., es gibt keinen Zustandspunkt der Brennkraftmaschine 17, bei der beide Ventile gleichzeitig mit einem derartigen Tastverhältnis beaufschlagt werden.

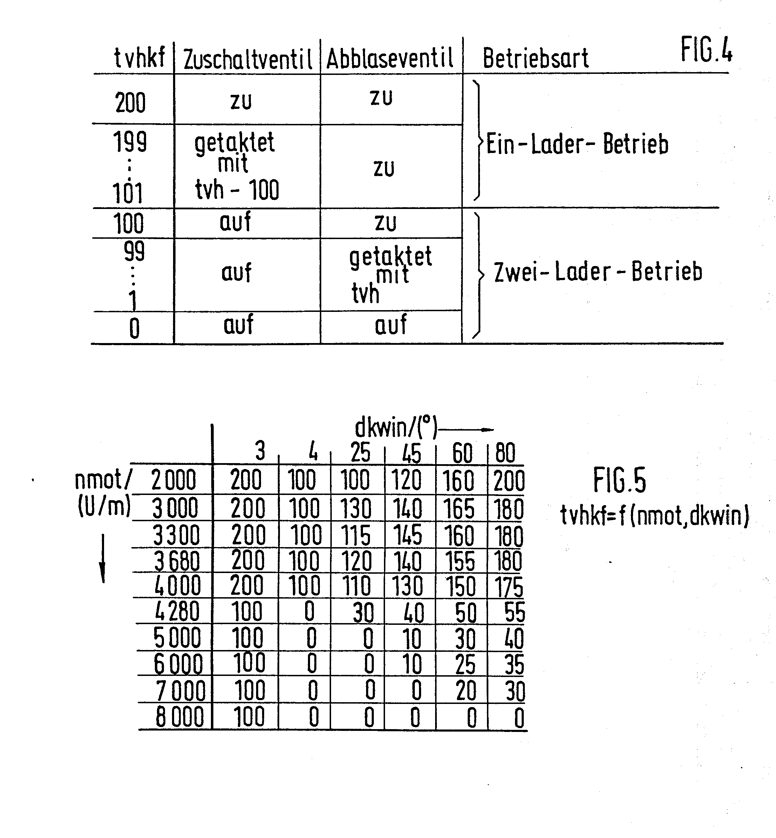

Hieraus ergibt sich die Möglichkeit, den Zustand beider Ventile eindeutig durch nur eine Bezugszahl darzustellen, einem Tastverhältnis tvhkf mit dem Bereich 0 bis 200 (siehe Fig. 4): Im Bereich von 0 bis 100 stellt tvhkf direkt das Tastverhältnis (zweites Tastverhältnis wg) für das Abblaseventil 35 dar. Im Bereich zwischen 100 bis 200 ergibt sich das Tastverhältnis (erstes Tastverhältnis tzv) für das Zuschaltventil 34 aus tvh durch Subtraktion von 100. Das Abblaseventil 35 ist in diesem Bereich voll angesteuert, also zu.

Es wird somit lediglich ein Kennfeld für beide Ventile benötigt; es ergibt sich ein numerisch kontinuierlicher Übergang der Ansteuerung von einem Ventil zum anderen, so daß zusätzlich eine möglicherweise überlagerte Regelung vereinfacht wird. Der Bereich von tvhkf>100 bis tvhkf=200 sei nachfolgend "Ein- Lader- Betrieb" , (auch wenn dort der zweite Lader bereits zu arbeiten beginnt) und der Bereich von tvhkf=0 bis tvhkf=100 "Zwei- Lader- Betrieb" genannt.

Die Ermittlung des Tastverhältnisvorsteuerwertes tvhkf erfolgt, wie schon weiter oben beschrieben, über ein Kennfeld aus der Drehzahl nmot und dem Drosselklappenwinkel dkwin. Ein Beispiel für ein Tastverhältnis- Vorsteuer- Kennfeld ist Fig. 5 zu entnehmen.

In Fig. 1 sind schließlich noch in Klammern die äquivalenten Bezugszahlen und -zeichen der Abgasturbolader- Anlage nach Fig. 3 angegeben. Der physikalische Prozeß 1 umfaßt im wesentlichen die Abgasturbolader- Anlage 16 (ohne das Steuergerät 40). Das 1. System 2 ist gebildet durch das Steuerventil 38 und das Zuschaltventil 34, wogegen das 2.System 3 das Steuerventil 39 und das Abblaseventil 35 umfaßt.

Die beiden Systeme 2, 3 wirken gemeinsam auf die Größe c ein, die dem Ladedruck pist entspricht, und zwar im wesentlichen, 4, über die beiden Abgasturbolader 27 und 30, das Rückschlagventil 46, die Drosselklappe 37 und die Brennkraftmaschine 17. Aus der Prozeßgröße Ladedruck pist und anderen Prozeßgrößen erzeugt die (Funktion g, 5) Brennkraftmaschine 17 die Motordrehzahl nmot, welche die Größe y repräsentiert.

Diese dient, zusammen mit der Eingangsgröße Drosselklappenwinkel dkwin, welche x entspricht, als physikalische Parameter (x,y), in deren Abhängigkeit die Systeme 2, 3 über das Kennfeldmodul 6 mit dem Kennfeld nach Fig. 5 gesteuert werden. Gemeinsame Steuergröße ab ist das Tastverhältnis tvhkf, welchem eine Regelung (abhängig von der Prozeßgröße Ladedruck pist) über das Korrekturmodul 7 überlagert sein kann.

Kennfeld 6, Korrekturmodul 7, Subtraktionsmodul 8 und Auftrennmodul 9, welches die gemeinsame Steuergröße tvhkf bzw die korrigierte Ansteuergröße abk in die den beiden Einzelsteuergrößen a, b entsprechenden Steuersignale tzv, wg aufspaltet, sind im Steuergerät 40 implementiert.

Das Steuergerät 40 ist in an sich bekannter Mikrorechnertechnik aufgebaut und umfaßt im wesentlichen einen Ein- Chip- Mikrorechner oder einen Mikroprozessor, beispielsweise vom Typ 8031 der Firma Intel, flüchtige und nichtflüchtige Speicher, analoge bzw. digitale Ein- und Ausgangsbausteine sowie Anpassungs- und Treiberbausteine. Einzelne Module sind als Software realisiert und zusammen mit dem an Stützstellen erfaßten, quantisierten und digitalisierten Kennfeld in den nichtflüchtigen Speichern abgelegt.

Saugrohrdruck pist, Ladelufttemperatur tll, Drehzahl nmot und Drosselklappenwinkel dkwin werden analog oder digital erfaßt oder können dem Steuergerät 40 gegebenenfalls auch von einem Motormanagementrechner zur Verfügung gestellt werden. Analoge Größen werden hierbei über einen A/D-Wandler in für den Mikroprozessor verwertbare Signale gewandelt. Selbstverständlich kann das Steuergerät auch diskret aus analogen/digitalen Bauelementen/Bausteinen aufgebaut sein.

Das Verfahren ist jedoch nicht auf diesen speziellen Prozeß eingeschränkt. So ist es durchaus denkbar, beispielsweise zwei oder mehr Turbinen-Generator-Sätze (Stellventile am Turbineneintritt bzw. die Turbine selbst) eines Kraftwerkes in Abhängigkeit vom Strombedarf eines Netzes und weiteren Größen zu steuern. Auch hier erfolgt die Zuschaltung bzw. die Aufschaltung der Turbinen-Generator-Sätze aus Netz nacheinander, d. h., ein weiterer wird erst dann zugeschaltet, wenn der vorhergehende bereits voll am Netz ist. Die Steuerung ist somit äquivalent zu der der Register-Turbolader- Anlage.

Ebenso ist denkbar, daß die Systeme 2, 3 gleichzeitig mit demselben Ansteuerwert (a=b)=... beaufschlagt werden. Die Einzelsteuergrößen a, b ergeben sich dann durch arithmetische Mittelwertbildung aus der gemeinsamen Ansteuergröße.

Eine weitere Möglichkeit ergibt sich für Prozesse, bei denen ein 1. System zunehmend stärker angesteuert, während ein zweites im gleichen Maße weniger angesteuert wird und umgekehrt. Ein solches Steuerverfahren ist beispielsweise bei einem Drucksteuersystem einsetzbar, bei dem eine Pumpe laufend Druckmedium über ein Ventil in einen Arbeitskreis (Speicher) fördert, um den Druck zu erhöhen und ein zweites Ventil den Arbeitskreis gegen einen Sumpf öffnet, um den

0253077

/11

Druck zu reduzieren; der Druck im Arbeitskreis ist hierdurch
stetig zwischen dem maximalen Pumpendruck und dem Nulldruck
steuerbar. Der 1. Ansteuerwert a ergibt sich hierbei direkt
aus ab, der 2. Ansteuerwert durch Differenzbildung b=ab-a.

Patentansprüche

1. Verfahren zum Steuern von wenigstens zwei Systemen eines physikalischen Prozesses, wobei die physikalischen Systeme in Abhängigkeit $(a=fa(x,y), b=fb(x,y))$ von denselben physikalischen Prozeßgrößen $(x,y)$ jeweils über ein dem jeweiligen System zugeordnetes Kennfeld $(fa(x,y), fb(x,y))$ gesteuert werden und mittelbar oder unmittelbar auf eine weitere gemeinsame Prozeßgröße (c) einwirken und wobei die Ansteuerung der Systeme in einem festen funktionellen Zusammenhang zueinander steht und die Ansteuergrößen (a, b) jeweils in einem festen Wertebereich ((amin) kleiner oder gleich (a) kleiner oder gleich (amax), bzw. (bmin) kleiner oder gleich (b) kleiner oder gleich (bmax)) liegen, dadurch gekennzeichnet, daß die physikalischen Systeme (2, 3) über lediglich ein, allen gemeinsames Kennfeld $(fab(x,y))$ (6) gesteuert $(ab=fab(x,y))$ werden, wobei die einzelnen Wertebereiche zu einem gemeinsamen Wertebereich zusammengefügt sind und die Ansteuergrößen (a, b) der einzelnen Systeme (2, 3) aus der gemeinsamen Steuergröße (ab) durch Umkehrung (9) des funktionellen Zusammenhangs bestimmt werden.

2. Verfahren nach Anspruch 1, dadurch gekennzeichnet, daß die einzelnen Wertebereiche aneinandergesetzt sind ((abmin=amin) kleiner oder gleich (ab) kleiner oder gleich (abmax=amax+bmax), mit (ab=a+b)).

3. Verfahren nach Anspruch 2, dadurch gekennzeichnet, daß sich der funktionelle Zusammenhang dadurch ergibt, daß ein 1. System (2) nur dann angesteuert wird, wenn ein 2. System (3) nicht angesteuert ist und das 2. System (3) nur dann angesteuert wird, wenn das 1. System (2) mit seinem Maximalwert (amax) angesteuert (vollausgesteuert) ist.

4. Verfahren nach Anspruch 2, dadurch gekennzeichnet, daß sich der Ansteuerwert (a) des 1. Systems (2) aus der gemeinsamen Ansteuergröße (ab) direkt ergibt, sofern diese kleiner oder gleich (11) dem Maximalwert (amax) für das 1. System (2) ((ab) kleiner oder gleich amax) ist und gleich dem Maximalwert (amax) gesetzt ist, sofern die gemeinsame Ansteuergröße (ab) größer als der Maximalwert (amax) ist (12), und der Ansteuerwert des 2. Systems (3) (b=ab-amax) gleich seinem Minimalwert (bmin) gesetzt ist, sofern die gemeinsame Ansteuergröße (ab) kleiner oder gleich dem Maximalwert (amax) ist (13), und durch Subtraktion (15) des Maximalwerts (amax) von der gemeinsamen Ansteuergröße (ab) bestimmt wird, sofern diese größer als der Maximalwert (amax) ist (14).

5. Verfahren nach Anspruch 2, dadurch gekennzeichnet, daß sich der funktionelle Zusammenhang dadurch ergibt, daß die Systeme (2, 3) gleichzeitig mit derselben Ansteuergröße (a=b=...) beaufschlagt werden, wobei sich diese aus der gemeinsamen Ansteuergröße (ab) durch arithmetische Mittelwertbildung ergibt.

6. Verfahren nach Anspruch 1, dadurch gekennzeichnet, daß sich der funktionelle Zusammenhang dadurch ergibt, daß ein 1. Ansteuerwert (a) eines 1. Systems (2) mit wachsender gemeinsamer Ansteuergröße (ab) zunimmt, während ein 2. Ansteuerwert (b) eines 2. Systems (3) im gleichen Sinn abnimmt, wobei sich der 1. Ansteuerwert (a) aus der gemeinsamen Ansteuergröße (ab) direkt ergibt, während der 2. Ansteuerwert aus der Differenz des Maximalwerts (abmax) der gemeinsamen Ansteuergröße (ab) und dem 1. Ansteuerwert (a) bestimmt wird.

7. Verfahren nach Anspruch 5 oder 6, dadurch gekennzeichnet, daß der Wertebereich der Ansteuergrößen Zahlen aus einer oder mehrerer ganzzahliger Potenzen der Basis des verwendeten Zahlensystems enthält.

8. Verfahren nach Anspruch 7, dadurch gekennzeichnet, daß als Basis die Zahl 10 dient und der Wertebereich die ganzen Zahlen von 0 bis 100 umfaßt.

x(dkwin)   6(40)   8(40)   7(40)   Gk   1(16,(-)40)

y(nmot)

ab(tvhkf)   abk   9(40)   a(tzv)   2(38,34)   4(27,30,46,37,17)   c(pist)

b(wg)   3(39,35)   f

5(17)   g

FIG.1

9

abk   10   U≤V   11   bmin(0)   12   a(tzv)

ab(tvhkf)   amax   U U V   (100)   +M   0   b(wg)

13   U>V   V U   +   −   15   14

FIG.2

0253077

FIG.3

nmot
dkwin
pist
tll
wg
tzv

2/3

0253077

FIG.4

| tvhkf | Zuschaltventil | Abblaseventil | Betriebsart |
|---|---|---|---|
| 200 | zu | zu | Ein-Lader-Betrieb |
| 199 ⋮ 101 | getaktet mit tvh – 100 | zu | Ein-Lader-Betrieb |
| 100 | auf | zu | Zwei-Lader-Betrieb |
| 99 ⋮ 1 | auf | getaktet mit tvh | Zwei-Lader-Betrieb |
| 0 | auf | auf | Zwei-Lader-Betrieb |

FIG.5

$tvhkf = f(nmot, dkwin)$

| | | dkwin/(°) | | | | | |
|---|---|---|---|---|---|---|---|
| | | 3 | 4 | 25 | 45 | 60 | 80 |
| nmot/ (U/m) | 2000 | 200 | 100 | 100 | 120 | 160 | 200 |
| | 3000 | 200 | 100 | 130 | 140 | 165 | 180 |
| | 3300 | 200 | 100 | 115 | 145 | 160 | 180 |
| | 3680 | 200 | 100 | 120 | 140 | 155 | 180 |
| | 4000 | 200 | 100 | 110 | 130 | 150 | 175 |
| | 4280 | 100 | 0 | 30 | 40 | 50 | 55 |
| | 5000 | 100 | 0 | 0 | 10 | 30 | 40 |
| | 6000 | 100 | 0 | 0 | 10 | 25 | 35 |
| | 7000 | 100 | 0 | 0 | 0 | 20 | 30 |
| | 8000 | 100 | 0 | 0 | 0 | 0 | 0 |